# FASCICULE DE BREVET EUROPEEN

(11) **EP 1 652 647 B1**
(45) Date de publication et mention de la délivrance du brevet: **10.12.2008**
(21) Numéro de dépôt: 05292239.0
(22) Date de dépôt: 24.10.2005
(51) Int. Cl.: B29C 45/14, B29C 33/30, B29C 45/37, B29C 45/26, B29L 31/08

(54) **Moule de réalisation d'une hélice pour ventilateur de véhicule automobile et procédé associé**
Formwerkzeug und Verfahren zur Herstellung einer Lüfterrad für ein Kraftfahrzeug
Mould and method for producing a fan rotor for a vehicle

(30) Priorité: 02.11.2004 FR 0411662
(43) Date de publication de la demande: 03.05.2006
(73) Titulaire: Faurecia Cooling Systems, 92000 Nanterre (FR)
(72) Inventeur: Ougier, Daniel, 25230 Seloncourt (FR); Nelh, Frédéric, 25200 Montbeliard (FR); Lucbernet, Bruno, 25230 Seloncourt (FR); André, Maunel, 25350 Mandeure (FR); Bacilieri, Sylvain, 25400 Audincourt (FR); Vernier, Gabriel, 25150 Neuchâtel Urtière (FR)
(74) Mandataire: Domenego, Bertrand

(56) Documents cités:
- EP-A- 1 083 035
- US-A- 5 409 656

## Description

La présente invention concerne un moule de réalisation d'une hélice pour ventilateur de véhicule automobile, l'hélice comprenant une région de liaison à un arbre d'entraînement en rotation de l'hélice autour d'un axe de rotation, le moule étant du type décrit dans le préambule de la revendication 1.

L'invention s'applique en particulier à la réalisation d'hélices pour ventilateurs de véhicules automobiles.

Un tel ventilateur, généralement dénommé groupe moto-ventilateur (GMV) est disposé par exemple en avant du radiateur de refroidissement du moteur thermique d'un véhicule automobile, pour améliorer par convection forcée l'échange de chaleur entre l'air extérieur et le fluide de refroidissement du moteur thermique circulant dans le radiateur.

L'hélice d'un tel ventilateur est réalisée par exemple par injection de matière sur un insert de liaison à un arbre d'entraînement en rotation de l'hélice, dans un moule du type précité.

L'hélice ainsi réalisée présente, dans certains cas, une répartition non homogène des masses dans sa structure, ce qui engendre un balourd lors de la rotation de l'hélice.

Ce balourd induit un décalage du centre d'inertie de l'hélice par rapport à son axe de rotation.

Pour pallier ce problème, et diminuer le balourd de l'hélice, on connaît de US 5 409 656 un moule du type précité, qui permet de réaliser une hélice dont l'axe de rotation passe sensiblement par le centre d'inertie de l'hélice.

A cet effet, le moule comprend un organe de positionnement de l'insert de liaison, monté mobile dans le premier demi-moule et des moyens d'excentration de l'organe de positionnement constitués par deux bagues montées rotatives dans le premier demi-moule. La rotation des bagues permet de bloquer en position l'organe de positionnement par rapport au premier demi-moule pour décaler latéralement l'axe de rotation de l'hélice par rapport à l'axe géométrique de l'hélice.

Un tel moule ne donne pas entière satisfaction. En effet, un mécanisme complexe de réglage est nécessaire pour excentrer l'organe de positionnement et le maintenir dans une position excentrée. Le coût d'un tel moule est donc élevé.

EP-A-1 083 035 décrit un moule de réalisation d'une hélice pour ventilateur selon le préambule de la revendication 1. Ce document décrit en outre un procédé de réalisation d'une hélice dans un tel moule comprenant des étapes de moulage d'une pluralité d'ébauches d'hélices par injection de matière dans la cavité de moulage du moule et de détermination d'une excentration moyenne de ces ébauches d'hélices.

Un but de la présente invention est donc de fournir un moule du type précité, qui présente un coût réduit, tout en permettant de réaliser une hélice de faible balourd.

A cet effet, l'invention a pour objet un moule selon la revendication 1.

Le moule selon l'invention peut présenter l'une ou plusieurs des caractéristiques qui font l'objet des revendications 2 à 8, prise(s) isolément ou selon toutes les combinaisons techniquement possibles.

L'invention a en outre pour objet un procédé de réalisation d'une hélice pour ventilateur de véhicule automobile selon la revendication 9.

L'invention sera mieux comprise à la lecture de la description qui va suivre, donnée uniquement à titre d'exemple, et faite en se référant aux dessins annexés, sur lesquels :
- la figure 1 est une vue de face d'une hélice réalisée dans un moule selon l'invention ;
- la figure 2 est une vue en coupe prise suivant un plan vertical médian des parties pertinentes d'un moule selon l'invention ; et
- la figure 3 est une vue partielle de côté d'un détail de la figure 2.

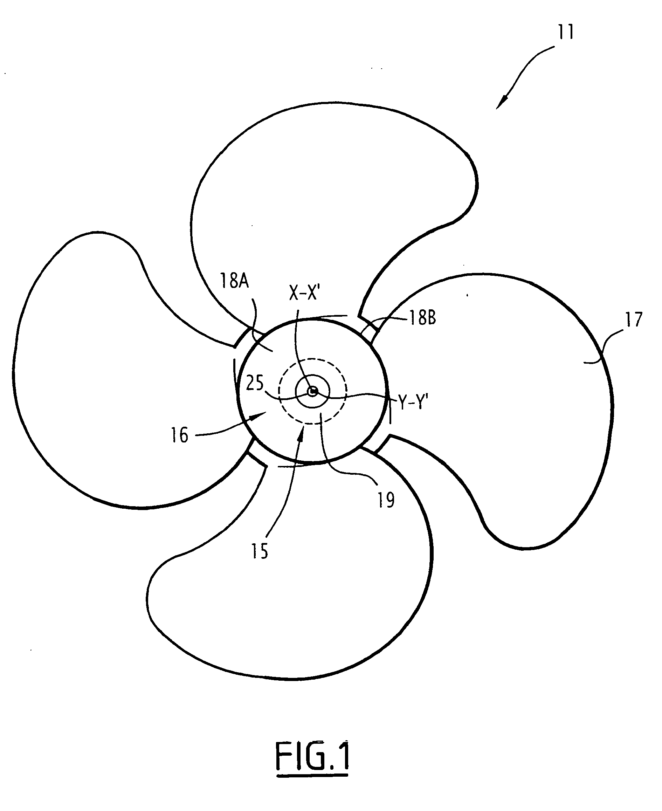

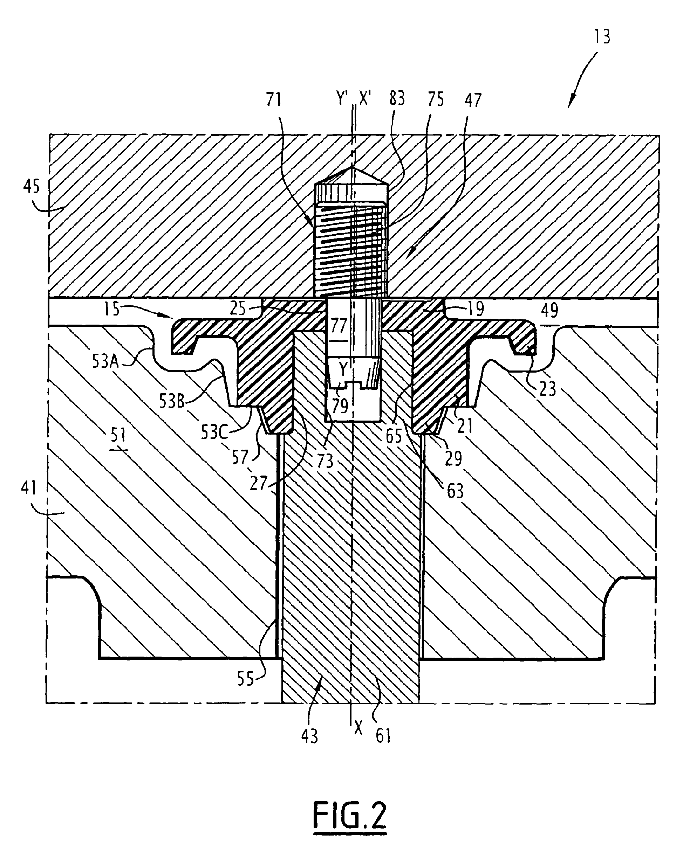

La figure 1 illustre schématiquement une hélice 11 de ventilateur de véhicule automobile, par exemple de ventilateur de bloc avant. L'hélice 11 a été réalisée dans un moule 13 représenté partiellement à la figure 2.

En référence à la figure 1, l'hélice 11 comprend un moyeu ou insert 15 central, un bol 16 surmoulé sur l'insert 15, et des pales 17 venues de matière avec le bol 16 et s'étendant radialement vers l'extérieur par rapport au bol 16. Dans l'exemple illustré, l'hélice 11 comprend quatre pales 17.

Le bol 16 comprend un fond 18A et une paroi latérale 18B qui fait saillie à partir du fond 18A.

Comme illustré par la figure 2, l'insert 15 comprend une paroi de base 19, horizontale sur la figure, une paroi annulaire 21 qui fait saillie verticalement vers le bas à partir de la paroi de base 19.

La paroi de base 19 s'étend dans le prolongement intérieur du fond 18A du bol. Elle est munie d'une ouverture centrale 25 de liaison à l'arbre de sortie d'un moteur d'entraînement en rotation de l'hélice 11 autour d'un axe de rotation d'hélice.

Comme illustré par la figure 1, l'ouverture centrale de liaison 25 s'étend suivant un axe X-X' décalé latéralement par rapport à l'axe géométrique central Y-Y' de l'hélice 11. Les axes X-X' et Y-Y' sont parallèles. L'axe X-X' passe sensiblement par le centre d'inertie de l'hélice 11, afin de diminuer son balourd.

La paroi de base 19 et la paroi annulaire 21 délimitent intérieurement un passage 27 de positionnement de l'insert 15 dans le moule 13. Le passage 27 s'étend le long de l'axe X-X'.

Le passage 27 débouche, d'une part, dans l'orifice central 25 et d'autre part, à l'extrémité inférieure 29 de la paroi annulaire 21.

Comme représenté à la Figure 1, les pales 17 s'étendent radialement vers l'extérieur à partir de la paroi latérale 18A et sont espacées angulairement les unes des autres. Les pales 17 sont propres à produire un écoulement d'air sensiblement parallèle à l'axe de rotation X-X' lorsque l'hélice 11 tourne autour de cet axe.

En référence à la figure 2, le moule 13 comprend un demi-moule inférieur 41, dans lequel est montée une tige 43 de positionnement de l'insert 15, un demi-moule supérieur 45, et des moyens 47 d'excentration de la tige de positionnement 43.

Comme on le verra plus bas, les demi-moule supérieur 45 et demi-moule inférieur 41 délimitent, lorsqu'ils sont dans la position de fermeture du moule 13, représentée sur la figure 2, une cavité de moulage 49 de forme complémentaire de l'hélice 11. La forme de la cavité de moulage 49 définit l'axe géométrique central Y-Y' de l'hélice 11.

Le demi-moule inférieur 41 comprend une paroi creuse 51 formant une pluralité de gradins annulaires 53A, 53B et 53C s'étendant autour de l'axe géométrique central Y-Y'.

Un passage 55 de réception de la tige de positionnement 43 est ménagé au fond de la paroi creuse 51 Ce passage 55 s'étend le long de l'axe géométrique central Y-Y'.

Le gradin 53C disposé au fond de la paroi 51, à l'extrémité supérieure du passage 55, délimite un épaulement de support de l'extrémité inférieure 29 de l'insert 15.

Cet épaulement 53C comprend une paroi latérale 57, divergeant vers la cavité 49. La paroi 37 a une forme complémentaire à la surface extérieure de la paroi annulaire 21 à son extrémité inférieure 29, avec interposition d'un jeu fonctionnel.

Dans cet exemple, le demi-moule inférieur 41 est mobile en translation le long de l'axe géométrique central Y-Y', entre une position d'ouverture du moule 13, dans laquelle le demi-moule inférieur 41 est écarté du demi-moule supérieur 45, et une position de fermeture du moule 13, dans laquelle le demi-moule inférieur 41 est en appui sur le demi-moule supérieur 45. Le demi-moule supérieur 45 est fixe axialement.

En variante, le demi-moule inférieur 41 est fixé axialement et le demi-moule supérieur 45 est mobile en translation le long de l'axe Y-Y'.

La tige 43 de positionnement de l'insert comprend une partie inférieure 61 disposée dans le demi-moule inférieur 41 et une tête de support d'insert 63 qui fait saillie dans la cavité de moulage 49.

La partie inférieure 61 est engagée dans le passage de réception 55 avec interposition d'un jeu annulaire. La tige 43 est ainsi mobile radialement à partir de l'axe géométrique central Y-Y' entre une position centrale dans laquelle la tige 43 est à l'écart du demi-moule 41 et des positions excentrées dans lesquelles la tige 43 est au contact du demi-moule 41.

La tête 63 présente une surface extérieure 65 de forme complémentaire au passage de positionnement 27.

Les moyens 47 d'excentration de la tige de positionnement 43 comprennent un tenon 71 vissé dans le demi-moule supérieur 45 et qui fait saillie dans la cavité de moulage 49. Les moyens 47 comprennent également une cavité de réception 73, ménagée dans la tête 63 de la tige 43, coaxialement à la tige 43.

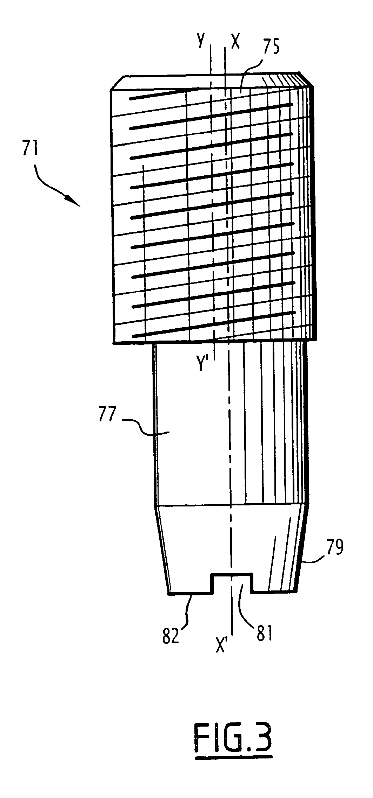

Dans l'exemple illustré par la figure 3, le tenon 71 comprend une base 75 et une partie 77 en saillie par rapport à la base 75, venue de matière avec la base 75. Le tenon 71 est par exemple réalisé par usinage d'une pièce cylindrique initiale.

La base 75 est de forme généralement cylindrique et présente un filetage sur sa surface radiale extérieure.

Dans cet exemple, la partie en saillie 77 est de diamètre inférieur au diamètre de la base 75. L'axe longitudinal X-X' de la partie en saillie 77 est décalé latéralement par rapport à l'axe longitudinal Y-Y' de la base 77. La partie 77 fait saillie dans la cavité de moulage 49 lorsque le tenon 71 est monté dans le demi-moule supérieur 45.

La partie en saillie 77 présente une forme complémentaire à celle de la cavité de réception 73 dans la tête 63, et une extrémité inférieure 79 de forme tronconique, convergeant vers le demi-moule inférieur 41, à l'écart du demi-moule supérieur 45 lorsque le tenon 71 est monté dans ce demi-moule 45.

Une forme de vissage 81 est ménagée dans la surface 82 inférieure de la partie en saillie 77 pour recevoir l'extrémité d'un moyen de vissage.

La base 75 est vissée dans un logement fileté 83 de forme complémentaire ménagé dans le demi-moule supérieur 45 et s'ouvrant dans la cavité de moulage 49. Le logement 83 s'étend le long de l'axe géométrique central Y-Y'.

Un procédé de réalisation d'une série d'hélices 11 de faible balourd dans un moule 13 selon l'invention va maintenant être décrit.

Ce procédé comprend une étape de moulage d'une pluralité d'ébauches d'hélices dans le moule 13, une étape de détermination de l'excentration moyenne des ébauches d'hélices, une étape d'usinage d'un tenon 71 sur la base de l'excentration moyenne déterminée, et une étape de moulage des hélices 11 de faible balourd.

Dans l'étape de moulage des ébauches d'hélices, une pluralité d'ébauches présentant un axe de rotation confondu avec l'axe géométrique central Y-Y' est réalisée.

A cet effet, un tenon de référence (non représenté), qui présente une partie en saillie 77 coaxiale avec sa base 75 est inséré dans le demi-moule supérieur 45 lorsque le moule est en position ouverte.

Pour chaque ébauche, un insert 15 est disposé sur la tige de positionnement 43, ia tête 63 étant reçue dans le passage 27 et l'extrémité inférieure 29 de l'insert s'appuyant sur le gradin inférieur 53C.

Le moule 13 est alors fermé par déplacement du demi-moule 41 vers le demi-moule 45. La partie en saillie 77 pénètre dans la cavité 73 de la tête 53 à travers l'ouverture centrale 25 de l'insert 15 lors de ce déplacement.

Puis, l'ébauche d'hélice est formée par injection d'une matière plastique dans la cavité de moulage 49 surmoulant l'insert 15, et refroidissement.

Dans l'étape suivante, l'excentration moyenne du centre d'inertie des ébauches d'hélices par rapport à l'axe géométrique central Y-Y' est déterminée. Par ailleurs, la position angulaire du centre d'inertie autour de l'axe géométrique central Y-Y' est mesuré sur chaque hélice et une position angulaire moyenne autour de cet axe est calculée.

Dans l'étape d'usinage, un tenon de positionnement 71 est réalisé sur la base de l'excentration moyenne déterminée. A cet effet, le tenon 71 est réalisé avec une partie en saillie 77 d'axe X-X' décalé latéralement par rapport à l'axe Y-Y' de la base 75, d'une valeur sensiblement égale à l'excentration moyenne déterminée des ébauches d'hélice.

L'étape de moulage des hélices 11 de faible balourd comprend une sous-étape d'insertion du tenon 71 réalisé à l'étape d'usinage dans le logement 83, et une sous-étape de moulage dans le moule 13 d'une série d'hélices 11 présentant un faible balourd.

Dans la phase d'insertion, le tenon 71 est vissé dans le demi-moule supérieur 45.

La position de l'axe X-X' autour de l'axe géométrique central Y-Y' est définie par la structure du tenon 71, en ce qui concerne sa distance à l'axe Y-Y'. La position de l'axe X-X' est réglée angulairement autour de l'axe Y-Y' en faisant tourner le tenon 71.

Dans la phase de moulage de chaque hélice 11 de faible balourd, le moule 13 est maintenu initialement en position ouverte. Un insert 15 est disposé sur la tige de positionnement 43 et le moule 13 est fermé.

Lors de la fermeture du moule 13, l'extrémité convergente 79 de la partie en saillie 77 pénètre progressivement dans la cavité 73 et guide le déplacement de la tige 43 pour que celle-ci s'aligne avec l'axe X-X'.

L'insert 15 se déplace latéralement avec la tige 43 par glissement de son extrémité inférieure 29 dans le jeu fonctionnel entre la paroi divergente 57 et l'extrémité 29.

Lorsque le moule 13 est fermé, l'ouverture centrale de liaison 25 s'étend le long de l'axe X-X'.

Une matière plastique fondue est alors injectée dans le moule puis refroidie pour former l'hélice 11 par surmoulage sur l'insert 15.

Cette hélice 11 présente un faible balourd, puisque son axe de rotation, qui correspond à l'axe X-X' lorsque l'hélice 11 est dans le moule 13, passe sensiblement par son centre d'inertie.

Si la position du centre d'inertie des hélices 11 évolue au cours du temps, par exemple sous l'effet de l'usure du moule 13 ou de modifications des paramètres de moulage, un nouveau tenon 71 est usiné sur la base de l'excentration modifiée du centre d'inertie.

L'utilisation d'un tenon 71 facilement usinable en fonction de la position du centre d'inertie, pour coopérer avec une tige de positionnement d'insert 43 montée mobile dans le moule 13 permet de réduire le coût du moule 13, tout en permettant la réalisation d'hélices 11 de faible balourd.

Par ailleurs, le réglage de l'excentration de la tige de positionnement 43 est facilité, puisque les moyens 47 d'excentration de cette tige 43 sont disposés de part et d'autre du moule 13 et sont donc facilement accessibles.

La forme convergente de l'extrémité inférieure 79 facilite le guidage de la tige de positionnement 43 lors de la fermeture du moule 13, particulièrement si l'axe de rotation X-X' de l'hélice 11 est fortement décalé par rapport à l'axe géométrique central Y-Y'.

En variante, l'hélice 11 est dépourvue d'insert 15. Le bol 16 est moulé par injection de matière plastique fondue dans la cavité 49 autour de la partie en saillie 77 du tenon 71 et autour de la tête 73. Après refroidissement, la région du bol 16 située au voisinage de la partie 77 et de la tête 73 forme une région de liaison à un arbre d'entraînement en rotation de l'hélice comprenant une ouverture centrale 25 de liaison. La position de la région de liaison sur l'hélice 11 est ajustée par le positionnement du tenon 71 et de la tige 43.

## Revendications

1. Moule (13) de réalisation d'une hélice (11) pour ventilateur de véhicule automobile, l'hélice (11) comprenant une région (15) de liaison à un arbre d'entraînement en rotation de l'hélice (11) autour d'un axe de rotation (X-X'), le moule (13) étant du type comprenant :
- des premier et deuxième demi-moules (41, 45), mobiles l'un par rapport à l'autre entre une position d'ouverture du moule (13) et une position de fermeture du moule (13) dans laquelle ils délimitent une cavité de moulage (49), la cavité de moulage (49) définissant un axe géométrique central (Y-Y') d'hélice (11) ;
- un organe (43) de positionnement de la région de liaison (15), l'organe de positionnement (43) étant monté mobile dans le premier demi-moule (41) pour positionner la région de liaison (15) dans la cavité de moulage (49) ; et
- des moyens (47) d'excentration de l'organe de positionnement (43) pour décaler latéralement l'axe de rotation (X-X') de l'hélice (11) par rapport à l'axe géométrique central (Y-Y') ;
**caractérisé en ce que** les moyens d'excentration (47) comprennent un tenon (71) de blocage en position de l'organe de positionnement (43), monté dans le deuxième demi-moule (45), le tenon (71) faisant saillie dans la cavité de moulage (49) le long d'un axe (X-X') décalé par rapport à l'axe géométrique central (Y-Y') et étant engagé, dans la position de fermeture du moule, dans une cavité (73) de blocage ménagée dans l'organe de positionnement (43).

2. Moule (13) selon la revendication 1, **caractérisé en ce que** le tenon (71) est monté rotatif dans le deuxième demi-moule (45) autour de l'axe géométrique central (Y-Y').

3. Moule (13) selon la revendication 1 ou 2, **caractérisé en ce que** le tenon (71) comprend une base (75) reçue dans un logement (83) du deuxième demi-moule (45) s'étendant le long de l'axe géométrique central (Y-Y'), et une partie en saillie (77) qui s'étend le long de l'axe décalé (X-X') lorsque la base (75) est disposée dans le logement (83) et qui fait saillie dans la cavité de moulage (49).

4. Moule (13) selon la revendication 3, **caractérisé en ce que** la base (75) et la partie en saillie (77) sont venues de matière.

5. Moule (13) selon l'une quelconque des revendications 2 à 4, **caractérisé en ce que** le tenon (71) est vissé dans le deuxième demi-moule (45).

6. Moule (13) selon l'une quelconque des revendications précédentes, **caractérisé en ce qu'**une extrémité (79) du tenon (71) en saillie dans la cavité de moulage (49) présente une forme convergeant vers le premier demi-moule (41).

7. Moule (13) selon l'une quelconque des revendications précédentes, **caractérisé en ce que** le deuxième demi-moule (45) est fixe, le premier demi-moule (41) étant mobile en translation le long de l'axe géométrique central (Y-Y'),

8. Moule (13) selon l'une quelconque des revendications précédentes, **caractérisé en ce que** la région de liaison (15) de l'hélice (11) comprend un insert (15), l'organe de positionnement (43) comprenant une surface de support (65) de l'insert (15).

9. Procédé de réalisation d'une hélice (11) pour ventilateur de véhicule automobile dans un moule (13) suivant l'une quelconque des revendications précédentes, l'hélice (11) comprenant une région (15) de liaison à un arbre d'entraînement en rotation de l'hélice (11) autour d'un axe de rotation (X-X'), comprenant les étapes de :
- moulage d'une pluralité d'ébauches d'hélices par injection de matière dans la cavité de moulage (49) ;
- détermination d'une excentration moyenne des centres d'inertie des ébauches d'hélice par rapport à leurs axes géométriques centraux (Y-Y') ;
- réalisation d'un tenon (71) de blocage en position de l'organe de positionnement (43) sur la base de l'excentration moyenne déterminée ;
- montage du tenon (71) usiné sur le deuxième demi-moule (45) ;
- blocage en position de l'organe de positionnement (43) par le tenon (71) ; et
- moulage de l'hélice (11) par injection de matière dans la cavité de moulage (49).

## Claims

1. Mould (13) for producing a fan rotor (11 for a motor vehicle, the rotor (11) comprising a region (15) connecting to a drive shaft for rotationally driving the rotor (11) about a rotation axis (X-X'), the mould (13) being of the type comprising:
- first and second half-moulds (41, 45) which are movable relative to one another between an open position of the mould (13) and a closed position of the mould (13) in which they delimit a mould cavity (491, the mould cavity (49) defining a central geometric axis (Y-Y') of the rotor (11);
- means (43) for positioning the connecting region (15), the positioning means (43) being movably mounted in the first half-mould (41) for the purpose of positioning the connecting region (15) in the mould cavity (49); and
- means (47) for offsetting the positioning means (43) in order to offset the rotation axis (X-X') of the rotor (11) laterally relative to the central geometric axis (Y-Y');
**characterised in that** the offsetting means (47) comprise a tenon (71) for blocking the positioning means (43) in position, said tenon being mounted in the second half-mould (45), the tenon (71) projecting into the mould cavity (49) along an axis (X-X') which is offset relative to the central geometric axis (Y-Y') and which engages, in the closed position of the mould, in a blocking cavity (73) provided in the positioning means (43).

2. Mould (13) according to claim 1, **characterised in that** the tenon (71) is mounted to be rotatable in the second half-mould (45) about the central geometric axis (Y-Y').

3. Mould (13) according to claim 1 or 2, **characterised in that** the tenon (71) comprises a base (75) which is accommodated in a recess (83) in the second half-mould (45) extending along the central geometric axis (Y-Y'), and a projecting portion (77) which extends along the offset axis (X-X') when the base (75) is located in the recess (83) and which projects into the mould cavity (49).

4. Mould (13) according to claim 3, **characterised in that** the base (75) and the projecting portion (77) are formed in one piece.

5. Mould (13) according to any one of claims 2 to 4, **characterised in that** the tenon (71) is screwed into the second half-mould (45).

6. Mould (13) according to any one of the preceding claims, **characterised in that** one end (79) of the tenon (71) projecting into the mould cavity (49) has a convergent shape towards the first half-mould (41).

7. Mould (13) according to any one of the preceding claims, **characterised in that** the second half-mould (45) is fixed, the first half-mould (41) being movable in translation along the central geometric axis (Y-Y').

8. Mould (13) according to any one of the preceding claims, **characterised in that** the connecting region (15) of the rotor (11) comprises an insert (15), the positioning means (43) comprising a support surface (65) for the insert (15).

9. Method of producing a fan rotor (11) for a motor vehicle in a mould (13) according to any one of the preceding claims, the rotor (11) comprising a region (15) connecting to a drive shaft for rotationally driving the rotor (11) about a rotation axis (X-X'), comprising the steps of:
- moulding a plurality of rotor blanks by injecting material into the mould cavity (49);
- determining a mean offset of the centres of inertia of the rotor blanks relative to their central geometric axes (Y-Y');
- producing a tenon (71) for blocking the positioning means (43) in position on the basis of the mean offset determined;
- mounting the machined tenon (71) on the second half-mould (45);
- blocking the positioning means (43) in position using the tenon (71); and moulding the rotor (11) by injecting material into the mould cavity (49).

## Patentansprüche

1. Formwerkzeug (13) zur Herstellung eines Lüfterrads (11) für ein Kraftfahrzeug, wobei das Lüfterrad (11) einen Verbindungsbereich (15) mit einer Rotationsantriebswelle des Lüfterrads (11) um eine Rotationsachse (X-X') enthält und das Formwerkzeug dabei des Typs ist, der umfasst:
- eine erste und eine zweite Formwerkzeughälfte (41, 45), gegenseitig beweglich zwischen einer Öffnungsposition des Formwerkzeugs (13) und einer Verschlussposition des Formwerkzeugs (13), in der sie einen Gießhohlraum (49) abgrenzen, wobei der Gießhohlraum (49) eine geometrische Mittelachse (Y-Y') des Lüfterrads (11) definiert;
- ein Positionierungsorgan (43) des Verbindungsbereichs (15), wobei das Positionierungsorgan (43) beweglich in die erste Formwerkzeughälfte (41) montiert ist, um den Verbindungsbereich (15) in dem Gießhohlraum (49) zu positionieren; und
- Exzentriereinrichtungen (47) des Positionierungsorgans (43) zur seitlichen Verschiebung der Rotationsachse (X-X') des Lüfterrads (11) in Bezug auf die geometrische Mittelachse (Y-Y'):
**dadurch gekennzeichnet, dass** die Exzentriereinrichtungen (47) einen in die zweite Formwerkzeughälfte (45) montierten Positionsarretierungs-Zapfen (71) des Positionierungsorgans (43) umfassen, wobei der Zapfen (71) längs einer in Bezug auf die geometrische Mittelachse (Y-Y') verschobene Achse (X-X') in den Gießhohlraum (49) vorsteht und in der Verschlussposition des Formwerkzeugs in einem Arretierungshohlraum (73) steckt, vorgesehen in dem Positionierungsorgan (43).

2. Formwerkzeug (13) nach Anspruch 1, **dadurch gekennzeichnet, dass** der Zapfen (71) drehbar um die geometrische Mittelachse (Y-Y') in die zweite Formwerkzeughälfte (45) montiert ist.

3. Formwerkzeug (13) nach Anspruch 1 oder 2, **dadurch gekennzeichnet, dass** der Zapfen (71) einen Basisteil (75) umfasst, der in einem sich längs der geometrischen Mittelachse (Y-Y') erstreckenden Sitz (83) der zweiten Formwerkzeughälfte (45) steckt, sowie einen Vorstehteil (77), der sich längs der verschobenen Achse (X-X') erstreckt, wenn der Basisteil (75) in dem Sitz (83) steckt, und der in den Gießhohlraum (49) vorsteht.

4. Formwerkzeug (13) nach Anspruch 3, **dadurch gekennzeichnet, dass** der Basisteil (75) und der Vorstehteil (77) aus einem Materialstück sind.

5. Formwerkzeug (13) nach den Ansprüchen 2 bis 4, **dadurch gekennzeichnet, dass** der Zapfen (71) in die zweite Formwerkzeughälfte (45) geschraubt ist.

6. Formwerkzeug (13) nach einem der vorangehenden Ansprüche, **dadurch gekennzeichnet, dass** ein Ende (79) des in den Gießhohlraum vorstehenden Zapfens (71) eine in Richtung erste Formwerkzeughälfte (41) konvergierende Form hat.

7. Formwerkzeug (13) nach einem der vorangehenden Ansprüche, **dadurch gekennzeichnet, dass** die zweite Formwerkzeughälfte (45) stationär ist und die erste Formwerkzeughälfte (41) längs der geometrischen Mittelachse (Y-Y') verschiebbar ist.

8. Formwerkzeug (13) nach einem der vorangehenden Ansprüche, **dadurch gekennzeichnet, dass** der Verbindungsbereich (15) des Lüfterrads (11) einen Einsatz (15) umfasst, das Positionierungsorgan (43) eine Stützfläche (65) des Einsatzes (15) umfasst.

9. Verfahren zur Herstellung eines Lüfterrads (11) für ein Kraftfahrzeug in einem Formwerkzeug (13) nach einem der vorangehenden Ansprüche, wobei das Lüfterrad (11) einen Verbindungsbereich (15) mit einer Rotationsantriebswelle des Lüfterrads (11) um eine Rotationsachse (X-X') enthält,
die folgenden Schritte umfassend:
- Gießen einer Vielzahl von Rohlingen durch Materialeinspritzung in den Gießhohlraum (49);
- Bestimmung einer mittleren Exzentrizität der Trägheitszentren Lüfterrad-Rohlinge in Bezug auf ihre geometrischen Mittelachsen (Y-Y');
- Realisierung eines Positionsarretierungs-Zapfens (71) des Positionierungsorgans (43) auf der Basis der bestimmten mittleren Exzentrizität;
- Montage des bearbeiteten Zapfens (71) in die zweite Formwerkzeughälfte (45);
- Positionsarretierung des Positionierungsorgans (43) durch den Zapfen (71); und
- Gießen des Lüfterrads (11) durch Materialeinspritzung in den Gießhohlraum (49).
